# EUROPÄISCHE PATENTSCHRIFT

(11) **EP 3 296 587 B1**
(45) Veröffentlichungstag und Bekanntmachung des Hinweises auf die Patenterteilung: **02.01.2019**
(21) Anmeldenummer: 17190277.8
(22) Anmeldetag: 11.09.2017
(51) Int. Cl.: F16F 7/08

(54) **REIBUNGSDÄMPFER**
FRICTION DAMPER
AMORTISSEUR À FRICTION

(30) Priorität: 14.09.2016 DE 102016217484
(43) Veröffentlichungstag der Anmeldung: 21.03.2018
(60) Teilanmeldung: 18179745.7
(73) Patentinhaber: SUSPA GmbH, 90518 Altdorf (DE)
(72) Erfinder: Weder, Michael, 90455 Nürnberg (DE); Bauer, Michael, 92271 Freihung (DE)
(74) Vertreter: Rau, Schneck & Hübner Patentanwälte Rechtsanwälte PartGmbB

(56) Entgegenhaltungen:
- WO-A1-2005/065484
- DE-A1- 2 117 704
- DE-A1-102013 109 196
- DE-U1- 20 109 958
- SU-A2- 894 261

## Beschreibung

Die vorliegende Patentanmeldung nimmt die Priorität der deutschen Patentanmeldung 10 2016 217 484.3 in Anspruch, deren Inhalt durch Bezugnahme hierin aufgenommen wird.

Die Erfindung betrifft einen Reibungsdämpfer.

Reibungsdämpfer sind aus DE 10 85 725 A, DE 10 2013 109 196 A1, DE 103 60 784 A1 sowie DE 10 2014 110 770 A1 bekannt und werden zur Bewegungsdämpfung in bewegliche Komponenten eingesetzt. Bei bestimmten Anwendungen ist es vorteilhaft, wenn die Dämpfungswirkung des Reibungsdämpfers in Abhängigkeit der Betätigungsrichtung unterschiedlich ist. Beim Öffnen einer Klappe, beispielsweise eines Möbelstücks oder eines Kraftfahrzeugkofferraums, soll eine vergleichsweise geringe Dämpfungswirkung die Öffnungsbewegung nicht behindern. Bei einer Schließbewegung der Klappe soll eine vergleichsweise starke Dämpfungswirkung verhindern, dass ein unbeabsichtigtes Zuschlagen der Klappe in Folge der Schwerkraft zu Geräuschbelästigungen oder Beschädigungen führt.

Es ist die Aufgabe der vorliegenden Erfindung, einen Reibungsdämpfer zu verbessern, bei dem die Dämpfungswirkung abhängig von der Betätigungsrichtung ist.

Diese Aufgabe ist erfindungsgemäß gelöst durch einen Reibungsdämpfer mit den im Anspruch 1 angegebenen Merkmalen.

Erfindungsgemäß wurde erkannt, dass bei einem Reibungsdämpfer eine richtungsabhängige Dämpfungswirkung dadurch vereinfacht erzielt wird, wenn ein Reibbelagsträger zwischen einer Auszugsposition und einer Einschubposition verlagerbar ist. Eine Reibungs-Einheit dient zum Erzeugen einer Reibungskraft auf einen Stößel, der entlang einer Längsachse eines Gehäuses zumindest abschnittsweise darin verlagerbar ist. Das Gehäuse kann mehrteilig ausgeführt sein und einen Zylindergehäuseabschnitt sowie einen damit verbundenen Dämpfungsgehäuseabschnitt aufweisen. Gemäß einer besonderen Ausführungsform kann der Zylindergehäuseabschnitt entfallen. Das Gehäuse besteht insbesondere ausschließlich aus dem Dämpfungsgehäuseabschnitt. Der Reibbelagsträger hält mindestens einen Reibbelag, der zum reibenden Anliegen an dem Stößel dient. Durch das reibende Anliegen des Reibbelags an dem Stößel und der Verlagerung des Stößels entlang der Längsachse entweder in Auszugsrichtung, also aus dem Gehäuse heraus, oder in Einschubrichtung, also in das Gehäuse hinein, wird eine Reibungskraft zwischen dem Stößel und der Reibungs-Einheit erzeugt. Der Reibbelagsträger ist relativ zum Stößel im Gehäuse verlagerbar angeordnet. In der Auszugsposition wirkt eine Auszugsreibung. In der Einschubposition wirkt eine Einschubreibung. Die Auszugsreibung und die Einschubreibung sind unterschiedlich. Der Reibungsdämpfer, insbesondere die Reibungs-Einheit, wirkt passiv. Das bedeutet, dass eine zusätzliche Aktivierung der Reibungs-Einheit zum Einstellen der unterschiedlichen Auszugsreibung und Einschubreibung entbehrlich ist. Die unterschiedlichen Reibungswirkungen stellen sich unmittelbar und selbsttätig in Abhängigkeit der Betätigungsrichtung des Stößels ein. Der erfindungsgemäße Reibungsdämpfer ist unkompliziert und robust ausgeführt. Der erfindungsgemäße Reibungsdämpfer kann besonders kosteneffizient hergestellt werden.

Eine Ausführung des Reibbelagsträgers mit Durchgangsöffnung, durch die der Stößel geführt ist, ermöglicht eine effektive Reibungsdämpfung. Der mindestens eine Reibbelag kann in radialer Richtung bezogen auf die Längsachse zwischen dem innen angeordneten Stößel und dem außen angeordneten Reibbelagsträger angeordnet sein. Insbesondere wird der mindestens eine Reibbelag von dem Reibbelagsträger in radialer Richtung an den Stößel gedrückt.

Eine Ausführung der Durchgangsöffnung mit einer senkrecht zur Längsachse zumindest abschnittsweise unsymmetrischen Kontur ermöglicht ein vorteilhaftes Umschalten zwischen der Auszugsposition und der Einschubposition. Eine unsymmetrische Kontur der Durchgangsöffnung ist beispielsweise dadurch gegeben, dass die Kontur eine Trennlinie aufweist. Die Durchgangsöffnung weist insbesondere eine unsymmetrische Innen-Kontur auf. Die unsymmetrische Innen-Kontur kann abschnittsweise symmetrisch ausgeführt sein und beispielsweise als Kreissegment ausgeführt sein. Symmetrisch bedeutet rotationssymmetrisch zur Längsachse. Die unsymmetrische Innen-Kontur weist jedenfalls mindestens einen unsymmetrischen Abschnitt auf, der insbesondere unrund ausgeführt ist. Es können auch mehrere, insbesondere getrennt voneinander ausgeführte unsymmetrische Abschnitte vorgesehen sein. Wesentlich ist, dass die unsymmetrische Innen-Kontur zumindest abschnittsweise nicht rotationssymmetrisch bezüglich der Längsachse ausgeführt ist. Unsymmetrisch bedeutet insbesondere nicht rotationssymmetrisch bezüglich der senkrecht zur Kontur orientierten Längsachse. Die Trennlinie ist insbesondere eine Gerade, die insbesondere die Längsachse schneidet. Die Trennlinie symbolisiert eine Trennebene, die sich entlang der Längsachse erstreckt. Die Trennlinie kann auch gekrümmt oder geknickt ausgeführt sein. Die Trennlinie unterteilt die Kontur der Durchgangsöffnung in einen symmetrischen, insbesondere runden Konturabschnitt und einen unsymmetrischen, insbesondere unrunden Konturabschnitt. Durch die Trennlinie sind der symmetrische Konturabschnitt und der unsymmetrische Konturabschnitt voneinander getrennt.

Eine Ausführung der Durchgangsöffnung mit einem ersten Durchgangsöffnungsabschnitt und einem zweiten Durchgangsöffnungsabschnitt, die jeweils eine Abschnitts-Längsachse aufweisen, die mit einem Neigungswinkel geneigt zueinander angeordnet sind, gewährleistet, dass der Reibbelagsträger in Abhängigkeit der Kippposition entweder mit einem ersten oder mit einem zweiten Durchgangsöffnungsabschnitt parallel zur Längsachse des Gehäuses angeordnet ist. Die Durchgangsöffnungsabschnitte weisen jeweils eine Abschnitts-Längsachse auf, die zueinander geneigt angeordnet sind. Die Abschnitts-Längsachsen sind insbesondere derart orientiert, dass in der Auszugsposition des Reibbelagsträgers eine erste Abschnitts-Längsachse parallel zur Längsachse des Gehäuses und eine zweite Abschnitts-Längsachse geneigt zu der Längsachse des Gehäuses angeordnet ist. Entsprechend ist in der Einschubposition die zweite Abschnitts-Längsachse parallel zur Längsachse des Gehäuses und die erste Abschnitts-Längsachse geneigt zur Längsachse des Gehäuses angeordnet.

Bei dem Reibungsdämpfer gemäß Anspruch 2 ergibt sich die Verlagerung des Reibbelagsträgers unmittelbar aus der Verlagerung des Stößels. Der Reibbelagträger wird passiv verlagert. Eine aktive Verlagerung des Reibbelagsträgers, beispielsweise mittels eines separaten Aktuators, ist entbehrlich. Die Verlagerung des Reibbelagsträgers ist integriert in den typischen Betätigungsablauf des Reibungsdämpfers.

Ein Kippen des Reibbelagsträgers gemäß Anspruch 3 vereinfacht den Wechsel zwischen der Auszugsposition und der Einschubposition. Die Kippachse ist insbesondere gehäusefest angeordnet.

Ein Kippzapfen gemäß Anspruch 4 vereinfacht die Kippbarkeit des Reibbelagsträgers.

Die Ausführung des Reibbelagsträgers gemäß Anspruch 5 ermöglicht eine besonders kosteneffiziente Herstellung. Der Reibbelagsträger kann aus zwei spiegelsymmetrisch ausgeführten Reibbelagsträgerteilen ausgeführt sein. Die Reibbelagsträgerteile sind zumindest bereichsweise als Halbschalen ausgeführt. Der Aufwand für die Herstellung ist reduziert.

Eine Ausführung des Gehäuses gemäß Anspruch 6 weist im Wesentlichen die Vorteile der Ausführung des Reibbelagsträgers gemäß Anspruch 5 auf, worauf hiermit verwiesen wird. Es ist denkbar, dass die Gehäuseteile zumindest spiegelsymmetrisch und insbesondere identisch ausgeführt sind.

Die Ausführung des Reibungsdämpfers gemäß Anspruch 7 gewährleistet, dass zumindest in einer Position des Reibbelagsträgers, beispielsweise in der Auszugsposition, ein stabiles Anliegen des Stößels an Reibbelägen gewährleistet ist. Dadurch ist der Stößel zuverlässig geführt. Robuste und insbesondere konstante Reibbedingungen sind gewährleistet. Ein auf die Längsachse bezogenes radiales Ausweichen des Stößels in dem Reibbelagsträger ist im Wesentlichen ausgeschlossen. Die Reibbeläge weisen im Wesentlichen eine Halbschalenkontur auf. Die Halbschalenkontur ist ein offener Rohrquerschnitt. Die Innenkontur der Halbschale ist insbesondere eine Innenzylindermantelfläche. Die Innenkontur der Halbschale kann auch anders ausgeführt sein. Wesentlich ist, dass die Innenkontur der Halbschale der Außenkontur des Stößels entspricht. Beispielsweise kann der Stößel eine senkrecht zur Längsachse orientierte, quadratische Querschnittsfläche aufweisen. In diesem Fall ist die Kontur der Halbschale polygonartig ausgeführt.

Eine Reibbelagsaufnahme gemäß Anspruch 8 ermöglicht eine zuverlässige und sichere Aufnahme des Reibbelags am Reibbelagsträger. Der Reibbelag ist in der Reibbelagsaufnahme insbesondere in radialer Richtung und/oder in axialer Richtung bezogen auf die Längsachse des Gehäuses und/oder die Abschnitts-Längsachse gehalten. Die Reibbelagsaufnahme weist insbesondere eine Tiefe auf, die geringfügig kleiner ist als die Dicke des Reibbelags, so dass der Reibbelag dauerhaft in radialer Richtung an den Stößel angepresst wird. Die Reibbelagsaufnahme weist eine entlang der Längsachse orientierte Länge auf, die etwa der Länge des Reibbelags entspricht. Der Reibbelag ist dann zuverlässig und axial nicht vorgespannt in der Reibbelagsaufnahme gehalten. Es ist auch denkbar, den Reibbelag in axialer Richtung vorzuspannen, indem die Reibbelagsaufnahme eine Länge aufweist, die kleiner ist als die Länge des Reibbelags. Alternativ ist es auch möglich, dass die Länge der Reibbelagsaufnahme größer ist als die Länge des Reibbelags. In diesem Fall kann der Reibungsdämpfer eine Freilauffunktion aufweisen.

Bei einer Ausführung der Durchgangsöffnung gemäß Anspruch 9 ist gewährleistet, dass in Abhängigkeit der Kippposition des Reibbelagsträgers ein zuverlässiges Anliegen des Reibbelagsträgers zumindest abschnittsweise am Stößel gewährleistet ist.

Ein Dämpfungsgehäuseabschnitt gemäß Anspruch 10 ermöglicht eine kleinbauende, kompakte und geschützte Anordnung der für die Reibungsdämpfung erforderlichen Komponenten.

Die Ausführung eines Reibungsdämpfers gemäß Anspruch 11, der insbesondere kein Zylindergehäuse aufweist, ist besonders unkompliziert und kostengünstig ausgeführt.

Ein Reibungsdämpfer gemäß Anspruch 12 ermöglicht eine verbesserte, insbesondere unmittelbare Schwenkbefestigung des Reibungsdämpfers an einem Schwenkteil, insbesondere einem Möbelelement.

Weitere vorteilhafte Ausgestaltungen, zusätzliche Merkmale und Einzelheiten der Erfindung ergeben sich aus der nachfolgenden Beschreibung von zwei Ausführungsbeispielen anhand der Zeichnung. Es zeigen:

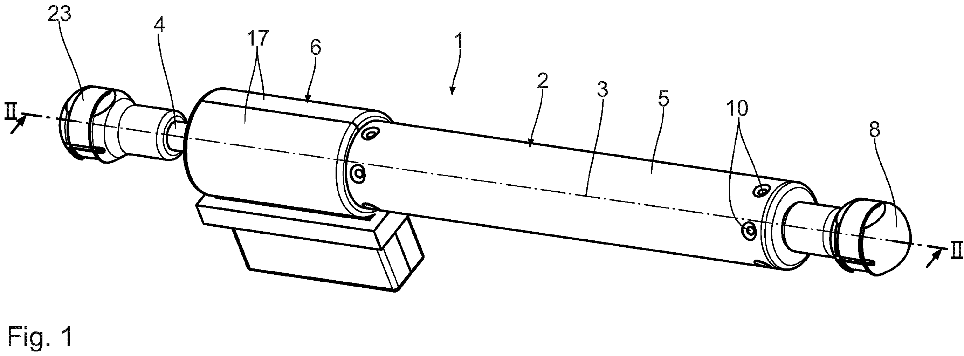

- Fig. 1: eine perspektivische Darstellung eines erfindungsgemäßen Reibungsdämpfers gemäß einem ersten Ausführungsbeispiel,
- Fig. 2: einen Längsschnitt gemäß Schnittlinie II-II in Fig. 1 bei einer Betätigung des Stößels in Auszugsrichtung,
- Fig. 3: eine Fig. 2 entsprechende Darstellung bei Betätigung des Stößels in Einschubrichtung,

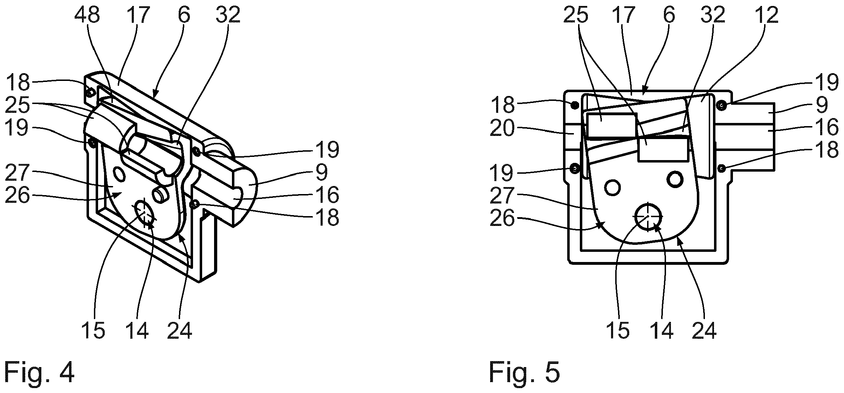

- Fig. 4: eine perspektivische Darstellung einer Reibungs-Einheit des Reibungsdämpfers gemäß Fig. 1,
- Fig. 5: eine Seitenansicht der Reibungs-Einheit in Fig. 4,

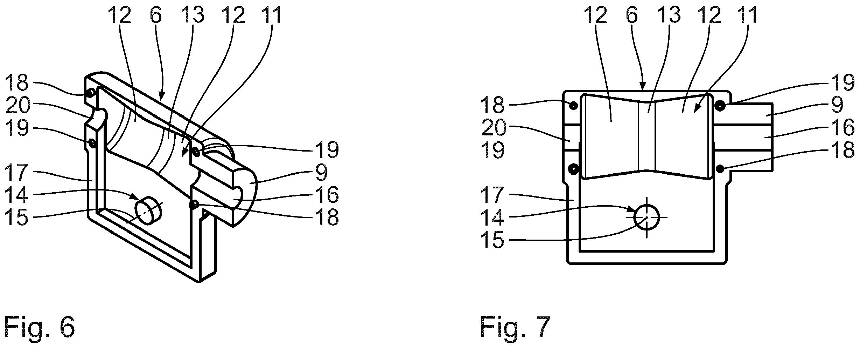

- Fig. 6: eine Fig. 4 entsprechende Darstellung eines Gehäuseteils ohne Reibungs-Einheit,
- Fig. 7: eine Fig. 5 entsprechende Darstellung des Gehäuseteils in Fig. 6,
- Fig. 8: eine perspektivische Darstellung eines Reibbelagsträgers der Reibungs-Einheit in Fig. 4,
- Fig. 9: eine Seitenansicht des Reibbelagsträgers in Fig. 8,
- Fig. 10: eine Fig. 1 entsprechende Perspektivdarstellung eines Reibungsdämpfers gemäß einem zweiten Ausführungsbeispiel,
- Fig. 11: eine Seitenansicht eines Möbelstücks in einer geöffneten Anordnung mit dem Reibungsdämpfer gemäß Fig. 10,
- Fig. 12: einen Längsschnitt gemäß Schnittlinie XII-XII in Fig. 11,
- Fig. 13: eine Fig. 11 entsprechende Darstellung des Möbelstücks in einer geschlossenen Anordnung, und
- Fig. 14: einen Längsschnitt gemäß Schnittlinie XIV-XIV in Fig. 13.

Ein Reibungsdämpfer 1 weist ein Gehäuse 2 mit einer Längsachse 3 und einen entlang der Längsachse 3 verlagerbaren Stößel 4 auf.

Das Gehäuse 2 ist mehrteilig ausgeführt und weist einen Zylindergehäuseabschnitt 5 und einen damit verbundenen Dämpfungsgehäuseabschnitt 6 auf. Der Zylindergehäuseabschnitt 5 und der Dämpfungsgehäuseabschnitt 6 sind entlang der Längsachse 3 hintereinander angeordnet. Der Zylindergehäuseabschnitt 5 und der damit verbundene Dämpfungsgehäuseabschnitt 6 bilden das gemeinsame Gehäuse 2.

Der Zylindergehäuseabschnitt 5 kann als Zylinderohr ausgeführt sein. Der Zylindergehäuseabschnitt 5 kann in der Ebene senkrecht zur Längsachse 3 eine andere Querschnittsform, insbesondere eine unrunde Querschnittsform mit unrunder Innenkontur, aufweisen. Das Gehäuse 2 ist an einem dem Stößel 4 gegenüberliegenden Ende mit einem Verschlussstopfen 7 verschlossen. An dem Verschlussstopfen 7 ist ein erstes Befestigungselement 8 in Form einer Kugelkopfaufnahme befestigt. Der Stößel 4 ist mit einem freien Ende 21 innerhalb des Gehäuses 2 angeordnet. An dem freien Ende 21 kann ein Ausziehschutz, insbesondere in Form einer Scheibe, angeordnet sein, um zu verhindern, dass der Stößel 4 unbeabsichtigt vollständig aus dem Gehäuse 2 herausgezogen wird. Ein dem freien Ende 21 gegenüberliegendes äußeres Ende 22 des Stößels 4 ist außerhalb des Gehäuses 2 angeordnet. An dem äußeren Ende 22 ist ein zweites Befestigungselement 23 angeordnet, das insbesondere identisch zu dem ersten Befestigungselement 8 als Kugelkopfaufnahme aufgeführt sein kann. Mit den Befestigungselementen 8, 23 kann der Reibungsdämpfer an den Komponenten, deren Relativbewegung zueinander gedämpft werden soll, befestigt werden. Beispielsweise ist das erste Befestigungselement an einem Möbelkorpus und das zweite Befestigungselement 23 an einer Möbelklappe befestigt. An einem dem Verschlussstopfen 7 gegenüberliegenden Ende des Zylinderrohrs ist der Zylindergehäuseabschnitt 5 mittels eines Einsteckstopfens 9 unmittelbar mit dem Dämpfungsgehäuseabschnitt 6 verbunden. Der Einsteckstopfen 9 ist einteilig mit dem Dämpfungsgehäuseabschnitt 6 ausgeführt.

Der Verschlussstopfen 7 und der Einsteckstopfen 9 sind an dem Zylinderrohr durch radial nach innen ragende Verpressungen 10 gehalten. Entlang des äußeren Umfangs sind an dem Zylinderrohr mehrere, insbesondere sechs oder acht Verpressungen 10 vorgesehen. Der Verschlussstopfen 7 und der Einsteckstopfen 9 sind bezogen auf die Längsachse 3 sowohl axial als auch radial am Zylindergehäuse eindeutig festgelegt.

Der Dämpfungsgehäuseabschnitt 6 ist in einer Ebene senkrecht zur Längsachse 3 unrund ausgeführt. In einem oberen Bereich des Dämpfungsgehäuseabschnitts 6, der von der Längsachse 3 durchquert wird, weist der Dämpfungsgehäuseabschnitt 6 eine im Wesentlichen sanduhrförmige Ausnehmung 11 auf. Die sanduhrförmige Ausnehmung 11 weist zwei kegelstumpfförmige Ausnehmungen 12 auf, die aufeinander konisch verjüngend zu laufend angeordnet und durch einen Scheibenabschnitt 13 miteinander verbunden sind.

Unterhalb der Vertiefung 11 ist in dem Dämpfungsgehäuseabschnitt 6 ein zylindrischer Kippzapfen 14 vorgesehen. Der Kippzapfen 14 erstreckt sich entlang einer Kippachse 15, die senkrecht zur Längsachse 3 des Gehäuses 2 orientiert ist. Die Kippachse 15 ist beabstandet zur Längsachse 3 orientiert. Die Kippachse 15 und die Längsachse 3 sind senkrecht zueinander orientiert. Die Kippachse 15 und die Längsachse 3 schneiden sich nicht. Die Lagebeziehung der Kippachse 15 und der Längsachse 3 im Raum wird als windschief bezeichnet.

Der Einsteckstopfen 9 weist eine durchgängige Öffnung 16 auf, durch die hindurch der Stößel 4 geführt verlagerbar ist.

Der Dämpfungsgehäuseabschnitt 6 ist mehrteilig ausgeführt und weist zwei identische Gehäuseteile 17 auf. Die Gehäuseteile 17 sind in einer Trennebene trennbar, die senkrecht zur Kippachse 15 orientiert ist. Die Trennebene weist die Längsachse 3 auf. Die Gehäuseteile 17 weisen beispielsweise jeweils zwei Verbindungszapfen 18 auf, die in korrespondierende Verbindungsöffnungen 19 eingesteckt werden können. Die beiden Gehäuseteile 17 können zu dem Dämpfungsgehäuseabschnitt 6 zusammengesteckt werden.

Das Gehäuse 2 weist einen Gehäuseöffnung 20 auf, durch die hindurch der Stößel 4 in das Gehäuse 2 geführt ist. Die Gehäuseöffnung 20 ist an dem Dämpfungsgehäuseabschnitt 6, der Öffnung 16 gegenüberliegend, angeordnet. Die Gehäuseöffnung 20 und die Öffnung 16 sind beide konzentrisch zur Längsachse 3 angeordnet.

Der Reibungsdämpfer 1 weist eine Reibungs-Einheit 24 auf, die zwei Reibbeläge 25 und einen Reibbelagsträger 26 umfasst. Der Reibbelagsträger 26 weist eine Tragplatte 27 auf. In der Tragplatte 27 ist eine Kippöffnung 28 vorgesehen, mit der der Reibbelagsträger 26 am Kippzapfen 14 um die Kippachse 15 kippbar im Gehäuse 2, insbesondere im Dämpfungsgehäuseabschnitt 6, angeordnet ist. An der Trägerplatte 27 ist einteilig ein Durchgangsabschnitt 29 angeformt, der eine Durchgangsöffnung 30 aufweist. Der Durchgangsabschnitt 29 ist hohlförmig ausgeführt. Durch die Durchgangsöffnung 30 ist der Stößel 4 hindurchgeführt. Die Durchgangsöffnung 30 ist in einer Ebene senkrecht zur Längsachse 3 zumindest abschnittsweise unsymmetrisch ausgeführt. Die Durchgangsöffnung 30 weist einen ersten Durchgangsöffnungsabschnitt 31 und einen zweiten Durchgangsöffnungsabschnitt 32 auf, die jeweils eine Abschnitts-Längsachse 33 bzw. 34 aufweisen. Die erste Abschnitts-Längsachse 33 und die zweite Abschnitts-Längsachse 34 sind zueinander geneigt angeordnet und weisen einen Neigungswinkel n auf, der gemäß dem gezeigten Ausführungsbeispiel etwa 10° beträgt.

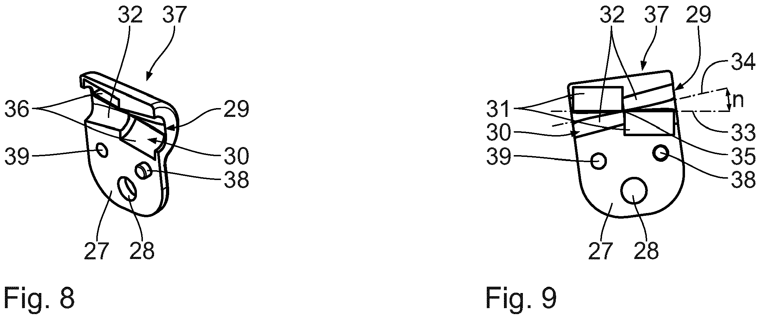

Die Abschnitts-Längsachsen 33, 34 schneiden sich in dem Schnittpunkt 35. Gemäß dem gezeigten Ausführungsbeispiel erstreckt sich der erste Durchgangsöffnungsabschnitt 31, wie in Fig. 9 gezeigt, links oberhalb und rechts unterhalb des der ersten Abschnitts-Längsachse 33 bezogen auf den Schnittpunkt 35.

Der erste Durchgangsöffnungsabschnitt ist als halbzylindrische Vertiefung entlang der ersten Abschnitts-Längsachse 33 ausgeführt, wobei der erste Durchgangöffnungsabschnitt 31 zwei Teilabschnitte aufweist, die getrennt voneinander ausgeführt und spiegelsymmetrisch zum Schnittpunkt 35 angeordnet sind. Entsprechend sind die Teilabschnitte des zweiten Durchgangsöffnungsabschnitts 32 spiegelsymmetrisch zum Schnittpunkt 35 und getrennt voneinander ausgeführt. Gemäß dem gezeigten Ausführungsbeispiel sind in dem ersten Durchgangsöffnungsabschnitt 31 in den beiden Teilabschnitten jeweils eine Reibbelagsaufnahme 36 angeordnet, in die der jeweils halbzylinderschalenförmige Reibbelag 25 eingesetzt ist. Die beiden Reibbeläge 25 sind an dem Reibbelagsträger 26 Z-förmig angeordnet. In einer Ebene senkrecht zur Längsachse 3 des Gehäuses weist die Durchgangsöffnung 30 einen unsymmetrischen Querschnitt auf. Mit jeweils einem Öffnungswinkel von 180° bezogen auf die Längsachse 3 erstreckt sich der erste Durchgangsöffnungsabschnitt 31 oder der zweite Durchgangsöffnungsabschnitt 3 aufgrund der geneigten Anordnung der Abschnitts-Längsachsen 33, 34 ist die Querschnittsfläche und/oder die Querschnittskontur der Durchgangsöffnung 30 entlang der Längsachse 3 veränderlich.

Der Reibbelagsträger 26 kann aus zwei spiegelsymmetrischen Reibbelagsträgerteilen 37 ausgeführt sein. Die Reibbelagsträgerteile 37 weisen jeweils einen Verbindungsbolzen 38 und eine Verbindungsausnehmung 39 auf, die zum Verbinden der Reibbelagsträgerteile 37 zu dem Reibbelagsträger 26 ineinander wechselweise eingreifen.

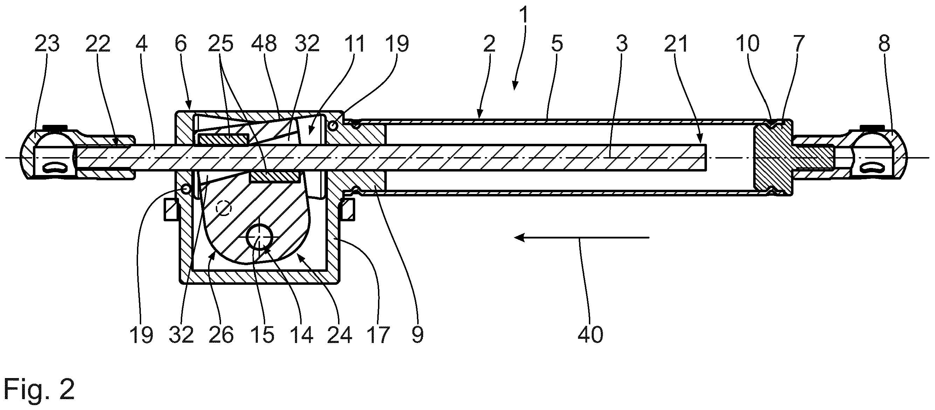

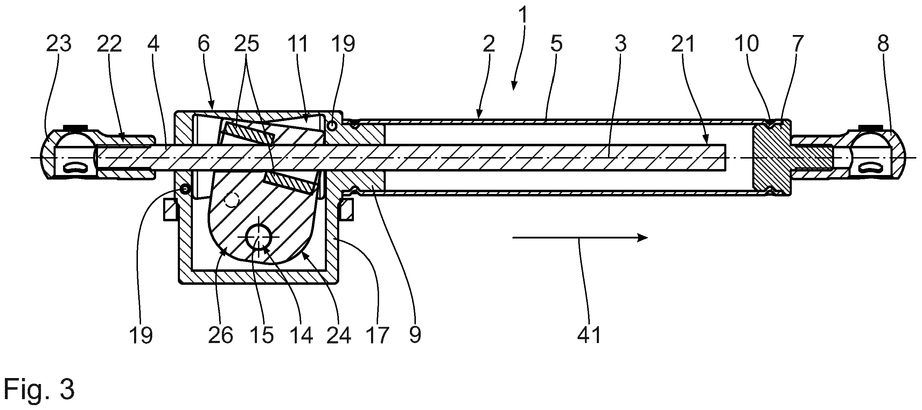

Nachfolgend wird die Funktion des Reibungsdämpfers 1 anhand der Fig. 2 und 3 näher erläutert. Bei einer Betätigung des Stößels 4 in Auszugsrichtung 40 kommt der Stößel 4 mit den Reibbelägen 25 in Kontakt. Aufgrund der anfänglich zwischen dem Stößel 4 und den Reibbelägen 25 wirkenden Haftreibung wird der Reibbelagsträger 26 von dem Stößel 4 mitgenommen, also um die Kippachse 15 in eine Auszugsposition geschwenkt. Der Betrag der Haftreibung, die einer Grundreibung entspricht und einen Wert größer als 0N aufweist, ist insbesondere gezielt einstellbar. Eine gezielte Einstellbarkeit des Haftreibungswertes wird durch die axiale und/oder radiale Vorspannung ermöglicht, mit der der Reibbelag 25 im Reibbelagsträger 26 angeordnet ist. Zusätzlich haben Geometrie und Material des Reibbelags 25 einen unmittelbaren Einfluss auf den Betrag der Haftreibung. Gemäß Fig. 2 erfolgt die Schwenkbewegung im Gegenuhrzeigersinn um die Kippachse 15. Ein weiteres Kippen des Reibbelagsträgers 26 um die Kippachse 15 bei der Betätigung des Stößels 4 in Auszugsrichtung 40 ist durch das Anliegen des Reibbelagsträgers 26 an dem Gehäuse 2, insbesondere dem Dämpfungsgehäuseabschnitt 6, insbesondere in einem die Gehäuseöffnung 20 umgebenden Stirnbereich des Dämpfungsgehäuseabschnitts 6 und/oder mit einer oberen Zylindermantelfläche 48 des Dämpfungsgehäuseabschnitts 6 an der Innenfläche des Kegelstumpfabschnitts 12, der der Gehäuseöffnung 20 abgewandt angeordnet ist, ausgeschlossen.

Die Auszugsposition des Reibbelagsträgers 26 ist in Fig. 2 dargestellt. Die Auszugsposition des Reibbelagsträgers 26 bedeutet, dass die halbschalenförmigen Reibbeläge 25 jeweils mit ihrer zylindrischen Innenfläche an einer Außenfläche des Stößels 4 anliegen. Der in Fig. 2 links dargestellte Reibbelag 25 drückt von oben auf den Stößel 4. Der in Fig. 2 rechts dargestellte Reibbelag 25 drückt von unten gegen den Stößel 4. Die Reibbeläge 25 werden zuverlässig gegen die Außenseite des Stößels 4 angedrückt. Eine Axialverlagerung des Stößels 4 wird mittels der Reibbeläge 25 reibungsgedämpft. Bei einer weiteren Betätigung des Stößels 4 in Auszugsrichtung 40 wirkt eine Reibungswirkung, eine Auszugsreibung, zwischen dem Stößel 4 und den Reibbelägen 25.

Bei einer Betätigung des Stößels 4 in einer der Auszugsrichtung 40 entgegengerichteten Einschubrichtung 41, wie dies in Fig. 3 dargestellt ist, bewirkt die zwischen dem Stößel 4 und den Reibbelägen 25 anfangs wirkende Haftreibung, dass der Reibbelagsträger 26 um die Kippachse 15 im Uhrzeigersinn geschwenkt wird. Die Schwenkbewegung des Reibbelagsträgers 26 im Uhrzeigersinn um die Kippachse 15 ist dadurch begrenzt, dass der Reibbelagsträger 26 am Gehäuse 2, insbesondere am Dämpfungsgehäuseabschnitt 6, insbesondere an dem Einsteckstopfen 9, und/oder mit der oberen Zylindermantelfläche 48 des Dämpfungsgehäuseabschnitts 6 an der Innenfläche des Kegelstumpfabschnitts 12 anliegt, der der Gehäuseöffnung 20 zugewandt angeordnet ist. Ein weiteres Kippen des Reibbelagsträgers 26 ist dadurch verhindert.

Der Reibbelagsträger 26 befindet sich in der Einschubposition. In der Einschubposition wird eine Einschubreibung verursacht. Gemäß dem gezeigten Ausführungsbeispiel unterscheiden sich die Auszugsreibung und die Einschubreibung voneinander. Im gezeigten Ausführungsbeispiel ist die Einschubreibung im Wesentlichen nicht vorhanden, da im zweiten Durchgangsöffnungsabschnitt 32 kein Reibbelag vorgesehen ist. Im ersten Durchgangsöffnungsabschnitt 31 liegen die Reibbeläge 25 jeweils mit einer äußeren, stirnseitigen Außenkante von oben und unten am Stößel 4 an.

Durch diese Linienberührung der Reibbeläge 25 wird die erforderliche Grundreibung gewährleistet, die das Kippen des Reibbelagsträgers 26 bei einer Betätigung in Auszugsrichtung gewährleistet. Der zweite Durchgangsöffnungsabschnitt 32 ist gemäß dem gezeigten Ausführungsbeispiel abschnittsweise als Zylinderöffnung ausgeführt, die einen Innendurchmesser aufweist, der geringfügig größer ist als der Außendurchmesser des Stößels 4. Bei der Anordnung des Reibbelagsträgers 26 in der Einschubposition wird der Stößel 4 im Wesentlichen reibungsfrei durch die Durchgangsöffnung 30 geführt.

Gemäß einem weiteren, nicht gezeigten Ausführungsbeispiel ist es denkbar, auch am zweiten Durchgangsöffnungsabschnitt zwei Reibungsbeläge anzubringen. Eine erfindungsgemäß unterschiedliche Reibungswirkung kann beispielsweise dadurch erzielt werden, dass verschiedene Materialien der Reibbeläge eingesetzt werden. Es ist auch denkbar, eine unterschiedliche Reibungswirkung dadurch zu erreichen, dass die Reibungsbeläge im ersten und zweiten Durchgangsöffnungsabschnitt 31, 32 mit unterschiedlichen Anpresskräften angeordnet werden. Selbstverständlich ist es gemäß einem weiteren, nicht dargestellten Ausführungsbeispiel auch möglich, den ersten Durchgangsöffnungsabschnitt 31 ohne Reibbeläge auszustatten und Reibbeläge nur am zweiten Durchgangsöffnungsabschnitt 32 vorzusehen. Bei einer derartigen Ausführung würde eine erhöhte Reibung in Einschubrichtung 41 und im Wesentlichen keine Reibung in Auszugsrichtung 40 erreicht werden.

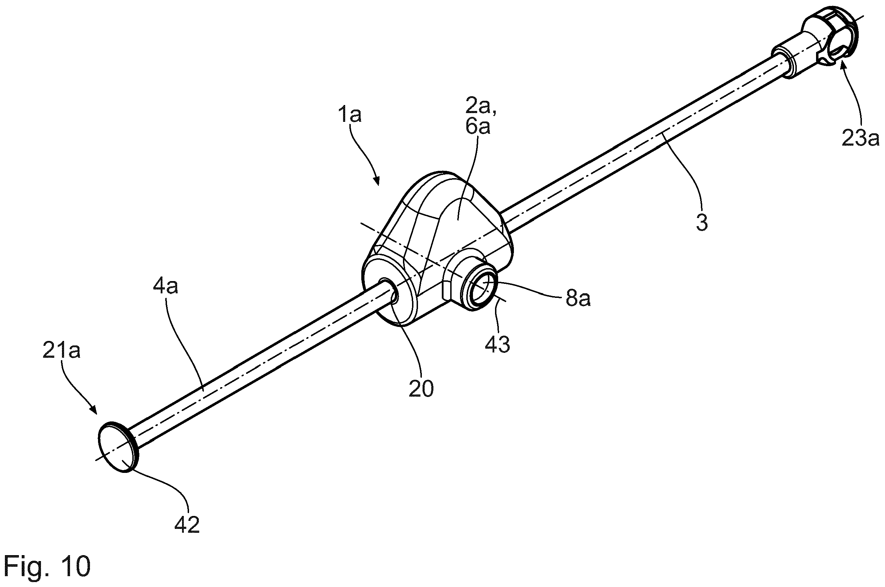

Im Folgenden wird unter Bezugnahme auf Fig. 10 bis 14 ein zweites Ausführungsbeispiel der Erfindung beschrieben. Konstruktiv identische Teile erhalten dieselben Bezugszeichen wie bei dem ersten Ausführungsbeispiel, auf dessen Beschreibung hiermit verwiesen wird. Konstruktiv unterschiedliche, jedoch funktionell gleichartige Teile erhalten dieselben Bezugszeichen mit einem nachgestellten a.

Der wesentliche Unterschied des Reibungsdämpfers 1a besteht darin, dass das Gehäuse 2a keinen Zylindergehäuseabschnitt aufweist. Das Gehäuse 2a umfasst ausschließlich den Dämpfungsgehäuseabschnitt 6a.

Der Stößel 4a ist durch das Gehäuse 2a hindurchgeführt und ist beidseits des Gehäuses 2a freiliegend angeordnet.

An dem freien Ende 21a des Stößels 4a ist ein Auszieh-Stoppelement 42 vorgesehen, das gemäß dem gezeigten Ausführungsbeispiel einteilig an dem Stößel 4a angeformt ist. Das Auszieh-Stoppelement 42 ist scheibenförmig ausgeführt und weist einen Durchmesser senkrecht zur Längsachse 3 auf, der größer ist als der Durchmesser der Gehäuseöffnung 20.

Das erste Befestigungselement 8a ist an der Außenseite des Gehäuses 2a, insbesondere an dem Dämpfungsgehäuseabschnitt 6a angeordnet. Das erste Befestigungselement 8a ist in Form eines Aufnahmestutzens ausgeführt, der insbesondere einteilig an dem Gehäuse 2a, insbesondere an dem Dämpfungsgehäuseabschnitt 6a angeformt ist. Der Aufnahmestutzen ist hülsenförmig ausgeführt und kann auf einen nicht dargestellten Aufnahmezapfen an dem Möbelelement 44 für eine schwenkbare Verbindung zusammenwirken. Insbesondere kann an einer Innenseite des Aufnahmestutzens ein Rastelement vorgesehen sein, um den in den Aufnahmestutzen eingeführten Aufnahmezapfen axial zu sichern, insbesondere zu verrasten. Ein ungewolltes Lösen des Aufnahmestutzens von dem Aufnahmezapfen ist dadurch verhindert.

Mit dem ersten Befestigungselement 8a ist der Reibungsdämpfer 1a, insbesondere mit dem Gehäuse 2a um eine Gehäuseschwenkachse 43 an dem Möbelelement 44, insbesondere an einem Möbelkorpus 45, schwenkbar angelenkt. An dem Möbelkorpus 45 ist eine Möbelklappe 46 schwenkbar angelenkt. Mit dem zweiten Befestigungselement 23a ist der Reibungsdämpfer 1a schwenkbar an der Möbelklappe 46 angelenkt.

Die Gehäuseschwenkachse 43 ist senkrecht zur Längsachse 3 orientiert. Die Gehäuseschwenkachse 43 schneidet die Längsachse 3.

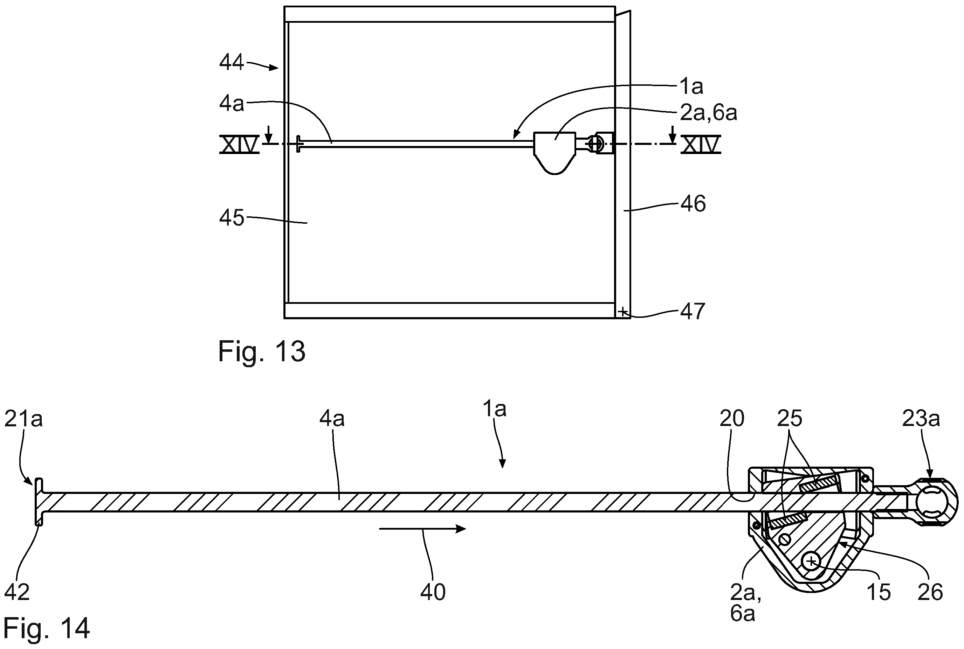

Nachfolgend wird die Funktion des Reibungsdämpfers 1a gemäß dem zweiten Ausführungsbeispiel näher erläutert. Ausgehend von der geschlossenen Anordnung des Möbelelements 44 in Fig. 13 wird die Möbelklappe 46 um die Möbelelementschwenkachse 47 gegenüber dem Möbelkorpus 45 zum Öffnen geschwenkt. Mit der Möbelklappe 46 wird der Stößel 4a, der mit dem zweiten Befestigungselement 23a an der Möbelklappe 46 angelenkt ist, relativ zu dem Gehäuse 2a entlang der Auszugsrichtung 40 verlagert.

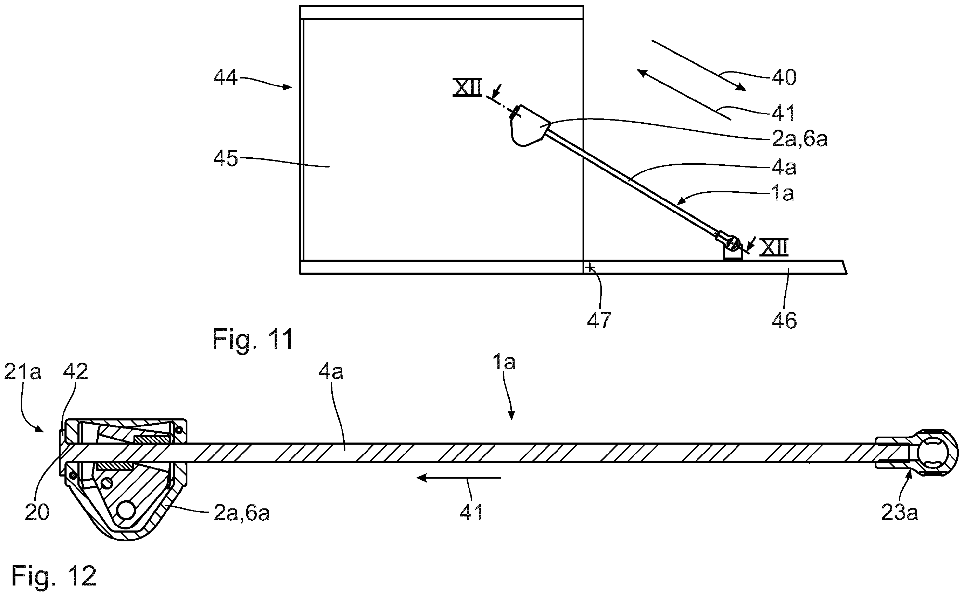

Dadurch, dass das Gehäuse 2a schwenkbar an dem Möbelkorpus 45 angelenkt ist, kann das Gehäuse 2a um die Gehäuseschwenkachse 43 schwenken. Dadurch ist gewährleistet, dass das Gehäuse 2a der Schwenkbewegung der Möbelklappe 46 folgt. Es ist gewährleistet, dass der Reibungsdämpfer 1a derart an dem Möbelelement 44 angelenkt ist, dass die Längsachse 3 parallel zu der Auszugsrichtung 40 bzw. der Einschubrichtung 41 orientiert ist. Die Neigung der Auszugsrichtung 40 bzw. der Einschubrichtung 41 hängt von dem Schwenkwinkel der Möbelklappe 46 gegenüber dem Möbelkorpus 45 ab. In Fig. 11 sind die Auszugsrichtung 40 und die Einschubrichtung 41 für den Schwenkwinkel der Möbelklappe von 90° gegenüber dem Möbelkorpus 45 dargestellt. Je kleiner der Schwenkwinkel der Möbelklappe 46 ist, desto geringer ist die Neigung der Auszugsrichtung 40 bzw. der Einschubrichtung 41 gegenüber der Horizontalen in Fig. 11.

In Fig. 13 sind die Einschubrichtung 41 und die Auszugsrichtung 40 horizontal orientiert.

Durch das Öffnen der Möbelklappe 46 wird der Stößel 4a gemäß Fig. 14 gegenüber dem Gehäuse 2a entlang der Auszugsrichtung 40 nach rechts verlagert. Durch den Reibkontakt der Reibbeläge 25 an dem Stößel 4a wird der Reibbelagsträger 26 um die Kippachse 15 im Uhrzeigersinn in die Position gemäß Fig. 12 geschwenkt. In dieser Position liegen die Reibbeläge 25 im Wesentlichen zylinderhalbschalenflächig an dem Stößel 4a an und verursachen eine maximale Reibungswirkung. In Auszugsrichtung 40 verursacht der Reibungsdämpfer 1a eine, insbesondere maximale, Reibungsdämpfung.

Bei einer Schließbewegung der Möbelklappe 46 gegenüber dem Möbelkorpus 45 wird der Stößel 4a entlang der Einschubrichtung 41 gegenüber dem Gehäuse 2a verlagert. Die Reibbeläge 25 werden infolge der Haftreibung zwischen den Reibbelägen 25 und dem Stößel 4a mit dem Reibbelagsträger 26 um die Kippachse 15 im Gegenuhrzeigersinn in die in Fig. 14 gezeigte Kippposition verlagert. In dieser Position verursacht der Reibbelagsträger 26 mit den Reibbelägen 25 eine minimale und insbesondere keine Reibungswirkung. Die Funktion des Reibungsdämpfers 1a ist im Wesentlichen identisch mit der des Reibungsdämpfers 1 gemäß dem ersten Ausführungsbeispiel.

## Patentansprüche

1. Reibungsdämpfer umfassend
a. ein eine Längsachse (3) aufweisendes Gehäuse (2; 2a),
b. einen entlang der Längsachse (3) verlagerbaren Stößel (4; 4a),
c. eine Reibungs-Einheit (24) zum Erzeugen einer Reibungskraft auf den Stößel (4; 4a), wobei die Reibungs-Einheit (24) umfasst
i. mindestens einen Reibbelag (25) zum reibenden Anliegen an dem Stößel (4; 4a),
ii. einen Reibbelagsträger (26), an dem der mindestens eine Reibbelag (25) gehalten ist,
wobei der Reibbelagsträger (26) relativ zum Stößel (4; 4a) im Gehäuse (2; 2a) zwischen einer Auszugsposition und einer Einschubposition verlagerbar angeordnet ist,
wobei in der Auszugsposition eine Auszugsreibung wirkt, die von der in der Einschubposition wirkenden Einschubreibung unterschiedlich ist,
wobei der Reibbelagsträger (26) eine Durchgangsöffnung (30) aufweist, durch die der Stößel (4; 4a) geführt ist,
**dadurch gekennzeichnet, dass**
die Durchgangsöffnung (30) eine senkrecht zur Längsachse (3) zumindest abschnittsweise unsymmetrische Kontur aufweist,
die Durchgangsöffnung (30) einen ersten Durchgangsöffnungsabschnitt (31) und einen zweiten Durchgangsöffnungsabschnitt (32) aufweist, wobei der erste Durchgangsöffnungsabschnitt (31) und der zweite Durchgangsöffnungsabschnitt (32) jeweils eine Abschnitts-Längsachse (33, 34) aufweisen, die mit einem Neigungswinkel (n) geneigt zueinander angeordnet sind.

2. Reibungsdämpfer gemäß Anspruch 1, **dadurch gekennzeichnet, dass** die Reibungs-Einheit (24) mit dem Stößel (4; 4a) derart zusammenwirkt, dass der Reibbelagsträger (26) bei einer Verlagerung des Stößels (4; 4a) in Auszugsrichtung (40) in die Auszugsposition und bei einer Verlagerung des Stößels (4; 4a) in Einschubrichtung (41) in die Einschubposition verlagert wird.

3. Reibungsdämpfer gemäß einem der vorstehenden Ansprüche, **dadurch gekennzeichnet, dass** der Reibbelagsträger (26) um eine Kippachse (15) kippbar im Gehäuse (2; 2a) angeordnet ist, wobei die Kippachse (15) quer, insbesondere senkrecht, zur Längsachse (3) angeordnet ist.

4. Reibungsdämpfer gemäß Anspruch 3, **dadurch gekennzeichnet, dass** im Gehäuse (2; 2a) ein Kippzapfen (14) vorgesehen ist, an dem der Reibbelagsträger (26) mit einer Kippöffnung (28) kippbar angelenkt ist.

5. Reibungsdämpfer gemäß einem der vorstehenden Ansprüche, **dadurch gekennzeichnet, dass** der Reibbelagsträger (26) zwei, insbesondere spiegelsymmetrisch ausgeführte, Reibbelagsträgerteile (37) aufweist.

6. Reibungsdämpfer gemäß einem der vorstehenden Ansprüche, **dadurch gekennzeichnet, dass** das Gehäuse (2; 2a) zwei, insbesondere spiegelsymmetrisch ausgeführte, Gehäuseteile (17) aufweist.

7. Reibungsdämpfer gemäß einem der vorstehenden Ansprüche, **gekennzeichnet durch** zwei, insbesondere identische Reibbeläge (25), die insbesondere jeweils eine Halbschalenkontur aufweisen.

8. Reibungsdämpfer gemäß Anspruch 1, **dadurch gekennzeichnet, dass** die Durchgangsöffnung (30) eine Reibbelagsaufnahme (36) für den mindestens einen Reibbelag (25) aufweist.

9. Reibungsdämpfer gemäß Anspruch 1, **dadurch gekennzeichnet, dass** die Durchgangsöffnung (30) einen Querschnitt senkrecht zur Längsachse (3) aufweist, der entlang der Längsachse (3) veränderlich ist.

10. Reibungsdämpfer gemäß einem der vorstehenden Ansprüche, **dadurch gekennzeichnet, dass** das Gehäuse (2; 2a) einen Dämpfungsgehäuseabschnitt (6; 6a) aufweist.

11. Reibungsdämpfer gemäß Anspruch 10, **dadurch gekennzeichnet, dass** das Gehäuse (2a) ausschließlich durch den Dämpfungsgehäuseabschnitt (6a) gebildet ist.

12. Reibungsdämpfer gemäß Anspruch 10 oder 11, **dadurch gekennzeichnet, dass** der Reibungsdämpfer ein erstes Befestigungselement (8; 8a) zur Befestigung an einem schwenkbaren Teil aufweist, wobei das erste Befestigungselement (8a) insbesondere an dem Dämpfungsgehäuseabschnitt (6a) angeordnet ist.

## Claims

1. Frictional damper comprising
a. a housing (2; 2a) which has a longitudinal axis (3),
b. a plunger (4; 4a) which can be moved along the longitudinal axis (3),
c. a frictional unit (24) for generating a frictional force on the plunger (4; 4a), the frictional unit (24) comprising
i. at least one friction lining (25) for bearing rubbingly against the plunger (4; 4a),
ii. a friction lining carrier (26), on which the at least one friction lining (25) is held,
the friction lining carrier (26) being arranged such that it can be moved relative to the plunger (4; 4a) in the housing (2; 2a) between a pulled-out position and a pushed-in position,
a pulled-out friction acting in the pulled-out position, which pulled-out friction is different from the pushed-in friction which acts in the pushed-in position,
the friction lining carrier (26) having a through opening (30), through which the plunger (4; 4a) is guided,
**characterized in that**
the through opening (30) has a contour which is asymmetrical at least in sections perpendicularly with respect to the longitudinal axis (3), the through opening (30) has a first through opening section (31) and a second through opening section (32), the first through opening section (31) and the second through opening section (32) having in each case one section longitudinal axis (33, 34), which section longitudinal axes (33, 34) are arranged in a manner which is inclined by an angle of inclination (n) with respect to one another.

2. Frictional damper according to Claim 1, **characterized in that** the frictional unit (24) interacts with the plunger (4; 4a) in such a way that the friction lining carrier (26) is moved into the pulled-out position during a movement of the plunger (4; 4a) in the pulling-out direction (40), and is moved into the pushed-in position during a movement of the plunger (4; 4a) in the pushing-in direction (41).

3. Frictional damper according to either of the preceding claims, **characterized in that** the friction lining carrier (26) is arranged in the housing (2; 2a) such that it can be tilted about a tilting axis (15), the tilting axis (15) being arranged transversely, in particular perpendicularly, with respect to the longitudinal axis (3).

4. Frictional damper according to Claim 3, **characterized in that** a tilting pin (14) is provided in the housing (2; 2a), on which tilting pin (14) the friction lining carrier (26) is articulated by way of a tilting opening (28) such that it can be tilted.

5. Frictional damper according to one of the preceding claims, **characterized in that** the friction lining carrier (26) has two friction lining carrier parts (37), in particular of mirror-symmetrical configuration.

6. Frictional damper according to one of the preceding claims, **characterized in that** the housing (2; 2a) has two housing parts (17), in particular of mirror-symmetrical configuration.

7. Frictional damper according to one of the preceding claims, **characterized by** two, in particular identical, friction linings (25) which, in particular, in each case have a half-shell contour.

8. Frictional damper according to Claim 1, **characterized in that** the through opening (30) has a friction lining receptacle (36) for the at least one friction lining (25).

9. Frictional damper according to Claim 1, **characterized in that** the through opening (30) has a cross section perpendicularly with respect to the longitudinal axis (3), which cross section is variable along the longitudinal axis (3).

10. Frictional damper according to one of the preceding claims, **characterized in that** the housing (2; 2a) has a damping housing section (6; 6a).

11. Frictional damper according to Claim 10, **characterized in that** the housing (2a) is formed exclusively by the damping housing section (6a).

12. Frictional damper according to Claim 10 or 11, **characterized in that** the frictional damper has a first fastening element (8; 8a) for fastening to a pivotable part, the first fastening element (8a) being arranged, in particular, on the damping housing section (6a).

## Revendications

1. Amortisseur de friction comprenant
a. un boîtier (2 ; 2a) présentant un axe longitudinal (3),
b. un vérin (4 ; 4a) mobile le long de l'axe longitudinal (3),
c. une unité de friction (24) prévue pour générer une force de friction sur le vérin (4 ; 4a), l'unité de friction (24) comprenant
i. au moins une garniture de friction (25) prévue pour s'appliquer par friction sur le vérin (4 ; 4a),
ii. un support de garniture de friction (26) sur lequel est fixé l'au moins une garniture de friction (25),
où le support de garniture de friction (26) par rapport au vérin (4 ; 4a) dans le boîtier (2 ; 2a) est disposé mobile entre une position de sortie et une position insérée,
où une friction de sortie est en action dans la position de sortie, qui est différente d'une friction d'insertion agissant dans la position insérée,
où le support de garniture de friction (26) présente un orifice de passage (30) par lequel le vérin (4 ; 4a) est mené,
**caractérisé en ce que**
l'orifice de passage (30) présente un pourtour asymétrique au moins par endroits perpendiculairement par rapport à l'axe longitudinal (3),
l'orifice de passage (30) présente un premier segment d'orifice de passage (31) et un second segment d'orifice de passage (32), où le premier segment d'orifice de passage (31) et le second segment d'orifice de passage (32) présentent respectivement un axe longitudinal de segment (33, 34), les axes sont disposés avec un angle d'inclinaison (n) l'un par rapport à l'autre.

2. Amortisseur de friction selon la revendication 1, **caractérisé en ce que** l'unité de friction (24) agit conjointement avec le vérin (4 ; 4a) de sorte que le support de garniture de friction (26) est déplacé, lors d'un déplacement du vérin (4 ; 4a) dans la direction de sortie (40), vers la position de sortie, et, lors d'un déplacement du vérin (4 ; 4a) dans la direction d'insertion (41), vers la position insérée.

3. Amortisseur de friction selon l'une des revendications précédentes, **caractérisé en ce que** le support de garniture de friction (26) est disposé dans le boîtier (2 ; 2a) en pouvant basculer autour d'un axe de basculement (15), où l'axe de basculement (15) est disposé perpendiculairement, notamment verticalement par rapport à l'axe longitudinal (3).

4. Amortisseur de friction selon la revendication 3, **caractérisé en ce qu'un** tourillon de basculement (14) est prévu dans le boîtier (2 ; 2a) sur lequel le support de garniture de friction (26) doté d'un orifice de basculement (28) est articulé en pouvant basculer.

5. Amortisseur de friction selon l'une des revendications précédentes, **caractérisé en ce que** le support de garniture de friction (26) présente deux parties de support de garniture de friction (37) conçues notamment symétriques comme dans un miroir.

6. Amortisseur de friction selon l'une des revendications précédentes, **caractérisé en ce que** le boîtier (2 ; 2a) présente deux parties de boîtier (17) conçues notamment symétriques comme dans un miroir.

7. Amortisseur de friction selon l'une des revendications précédentes, **caractérisé par** deux garnitures de friction (25) notamment identiques qui présentent respectivement un pourtour en demi-coque.

8. Amortisseur de friction selon la revendication 1, **caractérisé en ce que** l'orifice de passage (30) présente un logement de garniture de friction (36) pour l'au moins une garniture de friction (25).

9. Amortisseur de friction selon la revendication 1, **caractérisé en ce que** l'orifice de passage (30) présente une section transversale perpendiculaire à l'axe longitudinal (3) qui est variable le long de l'axe longitudinal (3).

10. Amortisseur de friction selon l'une des revendications précédentes, **caractérisé en ce que** le boîtier (2 ; 2a) présente une partie de boîtier d'amortissement (6 ; 6a).

11. Amortisseur de friction selon la revendication 10, **caractérisé en ce que** le boîtier (2a) est formé exclusivement par la partie de boîtier d'amortissement (6a).

12. Amortisseur de friction selon la revendication 10 ou 11, **caractérisé en ce que** l'amortisseur de friction présente un premier élément de fixation (8 ; 8a) pour la fixation d'une partie pivotable, où le premier élément de fixation (8a) est disposé notamment sur la partie de boîtier d'amortissement (6a).
